# EUROPÄISCHE PATENTSCHRIFT

(11) **EP 1 361 107 B1**
(45) Veröffentlichungstag und Bekanntmachung des Hinweises auf die Patenterteilung: **24.02.2010**
(21) Anmeldenummer: 03010267.7
(22) Anmeldetag: 07.05.2003
(51) Int. Cl.: B60N 2/46

(54) **Deckelteil, inbesondere für ein Kraftfahrzeug**
Lid, especially for a motor vehicle
Couvercle, notamment pour véhicule automobile

(30) Priorität: 08.05.2002 DE 10220651
(43) Veröffentlichungstag der Anmeldung: 12.11.2003
(73) Patentinhaber: Röchling Automotive AG & Co. KG, 68165 Mannheim (DE)
(72) Erfinder: Maierholzner, Thomas, 84137 Vilsbiburg (DE)
(74) Vertreter: Trossin, Hans-Jürgen

(56) Entgegenhaltungen:
- EP-A- 1 157 883
- DE-A- 19 812 432
- GB-A- 516 257
- US-A- 4 586 750
- US-A- 5 409 297
- US-A1- 2001 020 799
- US-A1- 2002 017 813
- US-B1- 6 375 265

## Beschreibung

Die Erfindung bezieht sich auf ein Deckelteil, insbesondere für eine Armlehne, das über mindestens einen in einem Scharnier verschwenkbar gelagerten, in mindestens einer Position feststellbaren und über eine Scharnierwelle verschwenkbaren Scharnierbügel gegenüber einem Trägerkörper gelagert ist, gemäß dem Oberbegriff von Anspruch 1.

Eine Armlehne ist bekannt aus der DE 198 12 432 C2. Die bekannte Armlehne ist verschwenkbar. Über eine Kulissenführung ist sie zudem höhenverstellbar.

Die US-Patentschrift 5,409,207 offenbart ein gattungsgemäßes Deckelteil für eine Armlehne, das über das Scharnier der Armlehne schwenkbar gelagert ist. Ein dämpfender elastischer Körper befindet sich dabei innerhalb einer gegenüber der Armlehne starren Scharnierachse.

Das US-Patent Nr. 4,586,750 offenbart eine in einem Scharnier verschwenkbar gelagerte Armlehne für einen Passagiersitz, wobei in dem Scharnier ein mit keiner anderen Komponente des Scharniers verbundener Ring vorhanden ist, der einen elastomeren Kern enthält.

Es ist ebenfalls aus dem Stand der Technik bekannt, in einem eine Schwenkwelle aufnehmenden Träger eine Kulissenführung vorzusehen, in der ein mit dem Scharnierbügel verbundener Kulissenstein gegen die Druckkraft einer Feder verschiebbar gelagert ist. Wenn eine hohe Kraft die Armlehne nach unten drückt, wird der Kulissenstein gegen die Kraft der Feder verschoben und die Armlehne gibt entsprechend ein wenig nach unten nach. Bei dieser Lösung zur Aufnahme von hohen Kräften, die auf die Armlehne wirken, wird aufgrund der im Verhältnis zur Stabilität des Trägers hohen Steifigkeit der Feder auch der Träger durch die hohe auf die Armlehne wirkende Auflagekraft verwunden. Die Auflagekraft wird somit nicht allein durch die Feder abgefangen, sondern sie wirkt über die Feder auf den gesamten Träger.

Es ist die Aufgabe der Erfindung, eine auf ein Deckelteil wirkende Kraft auf einfache Weise abzufangen, ohne die Fertigung der Armlehne zu erschweren.

Erfindungsgemäß wird diese Aufgabe mit einem Deckelteil gemäß Anspruch 1 dadurch gelöst, wobei in dem Scharnier ein Körper zur elastischen und dämpfenden Aufnahme einer auf das Deckelteil wirkenden Kraft vorgesehen ist, der wenigstens teilweise aus einem elastischeren Material als der Scharnierbügel und der Trägerkörper ausgebildet ist.

Soweit nachstehend der Begriff "elastisch" verwendet wird, ist damit stets die Elastizität des Körpers oder eines Teils dieses Körpers gemeint, die erfindungsgemäß erheblich höher gewählt wird als die auch stets vorhandene Elastizität aller übrigen Bestandteile des Deckelteils.

Gemäß der Erfindung wird jede auf das Deckelteil wirkende Kraft, insbesondere auch eine hohe oder in mißbräuchlicher Absicht auf diese aufgebrachte Kraft unmittelbar durch das Scharnier selber aufgenommen. Dazu dient ein in dieses eingebrachter Körper, der elastisch und gleichzeitig dämpfend nachgibt. Der Körper hat einen niedrigeren Elastizitäts- und/oder Kompressionsmodul und/oder Torsionsmodul, so dass er beim Einwirken hoher Kräfte auf die Armlehne elastisch und/oder durch Kompression und/oder durch Scherung reversibel nachgibt, ohne dass andere Teile des Trägers verformt werden oder Scherungs- und Schubkräfte erfahren.

Durch die erfindungsgemäße Lösung werden starke Kräfte durch ein einziges Bauelement, das zudem platzsparend im Bereich des Scharniers angeordnet ist, aufgenommen. Auch die Fertigung einer Armlehne in Verbindung mit einem Träger wird erheblich vereinfacht, da nur in das Scharnier ein zusätzliches Bauteil eingefügt wird. An dem Träger wird im Unterschied zum Stand der Technik keine unter Vorspannung stehende Feder angebracht, was allein bereits erheblichen Aufwand beim Einbau der Feder verursacht. Ebenso wird eine Kulissenführung eingespart. Auch störende Geräusche, die die Feder bei Belastung verursacht, werden durch die Erfindung vermieden.

Das erfindungsgemäße Deckelteil eignet sich besonders als Aufsatz für eine Mittelkonsole eines Automobils. Ebenso kann sie jedoch auch als Fondsitz-Armlehne verwendet oder außerhalb eines Kraftfahrzeugs eingesetzt werden. Der elastische Körper lässt sich unabhängig davon einsetzen, ob die Armlehne nur in einer einzigen Position festgelegt ist oder ob sie in verschiedenen Positionen mittels eines Rastmechanismus verrastbar ist. Durch die Erfindung wird ein Überlastschutz geschaffen, der eine erhebliche Überschreitung der an sich vorgesehenen Lasten reversibel aushält.

Vorteilhafte Weiterbildungen der Erfindung ergeben sich aus den Unteransprüchen und aus der Beschreibung.

Erfindungsgemäß ist der Körper mit dem Trägerkörper fest verbunden ist. Hierzu ist eine form- und/oder kraftschlüssige Verbindung geeignet. Dadurch wird eine einfache Verbindung mit dem Trägerkörper geschaffen. Vorteilhaft ist der Körper über mindestens eine Schraubverbindung mit dem Trägerkörper verbunden. Diese Verbindung ist bei der Fertigung leicht herstellbar. Bevorzugt ist der Körper über wenigstens zwei Schrauben mit dem Trägerkörper verbunden, wodurch eine drehsichere Verbindung zwischen dem Körper und dem Trägerkörper hergestellt ist.

Bevorzugt besteht der Körper entweder als ganzer aus mindestens einem einzigen elastischen Material, oder er weist in einer anderen bevorzugten Ausführungsform eine Mehrzahl von elastische Eigenschaften aufweisenden Elementen auf. Diese sind über ein festes Tragelement miteinander verbunden. Das Tragelement ist seinerseits mit dem Trägerkörper verbunden, beispielsweise verschraubt. Durch das aus einem festen Material bestehende Tragelement wird eine ausreichende Stabilität des Scharniers gewährleistet, während durch geeignete Wahl der Elemente die Elastizität eingestellt wird. Je nach zulässiger maximaler Auflagekraft der Armlehne lassen sich die elastischen Elemente durch Austausch leicht anpassen. Ein einziges Tragelement kann so für eine Vielzahl von Einsatzzwecken benutzt werden.

In einer Ausführungsform der Erfindung sind die Elemente mit den elastischen Eigenschaften mit einer Scharnieraufnahme verbunden, gegenüber der der mindestens eine Scharnierbügel drehbeweglich ist. Wenn der Körper als ganzer aus einem elastischen Material besteht, ist die Scharnieraufnahme mit dem ganzen Körper verbunden.

Bevorzugt weist hierzu die Scharnieraufnahme Zapfen oder Schrauben auf, mit denen sie mit dem Körper verbunden ist oder mit denen sie, wenn dieser einzelne elastische Elemente aufweist, in diese eingreift oder mit diesen verschraubt ist.

In einer Ausgestaltung der Erfindung hat die Scharnieraufnahme eine dem Körper zugewandten Kragen aufweist, der eine sich im wesentlichen parallel zur Richtung der Drehachse erstreckende Mantelwand des Körpers wenigstens teilweise überkragt. Dadurch wird das elastische Material des Körpers von außen fest eingefasst und kann bei Belastung nicht ausweichen.

Zur Erhöhung der Festigkeit dient es auch, wenn zusätzlich oder in einer anderen Ausführung die Scharnieraufnahme einen topfförmigen, die Scharnierwelle umgebenden Flansch aufweist, der den Körper wenigstens teilweise durchdringt. Auch durch diese Maßnahme wird eine innige Verbindung zwischen dem Körper und der Scharnieraufnahme geschaffen.

In einer weiteren vorteilhaften Weiterbildung der Erfindung hat das elastischere Material des Körpers Öffnungen, Durchbrüche oder Ausnehmungen; diese dienen ebenfalls der Einstellung der Elastizität.

Grundsätzlich kommt jedes Material von ausreichender Elastizität für den Einsatz in dem Körper oder für dessen elastische Elemente in Betracht, insbesondere ein elastischer Kunststoff oder Gummi. Verwendbar ist beispielsweise ein Kunststoff von einer Shorehärte von 100 Shore A. Aber auch andere Materialien können zum Einsatz kommen.

Üblicherweise haben verschwenkbar gelagerte Deckelteile zwei symmetrisch zueinander aufgebaute und durch die Scharnierwelle mit einander verbundene Scharnierbügel. Die Erfindung lässt sich jedoch auch dann einsetzen, wenn nur ein einziger Scharnierbügel zur Halterung des Deckelteils oder der Armlehne vorhanden ist.

Nachstehend wird die Erfindung in Ausführungsbeispielen anhand der Zeichnungen näher erläutert. Diese zeigen:

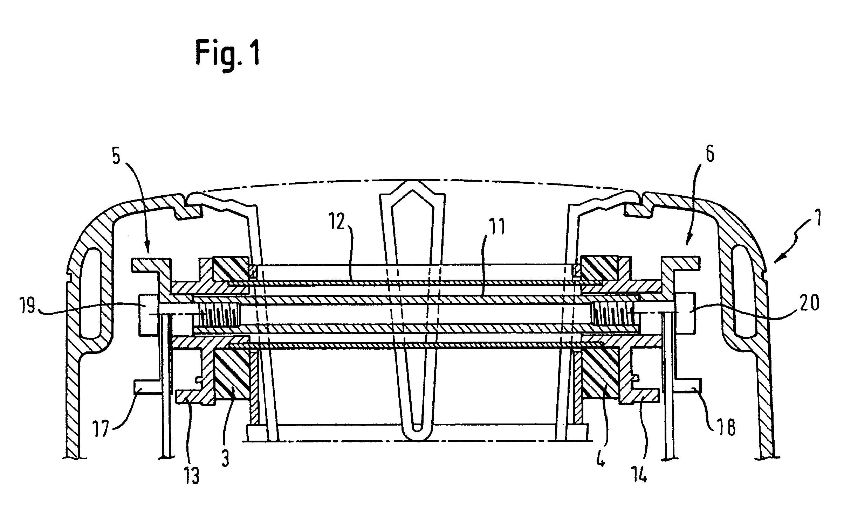

- Fig. 1: eine waagrechte Schnittansicht durch einen fondseitigen Ausschnitt einer Mittelkonsole eines Personenkraftfahrzeugs mit einer Scharnierwelle und zwei Scharnieren einer Armlehne,

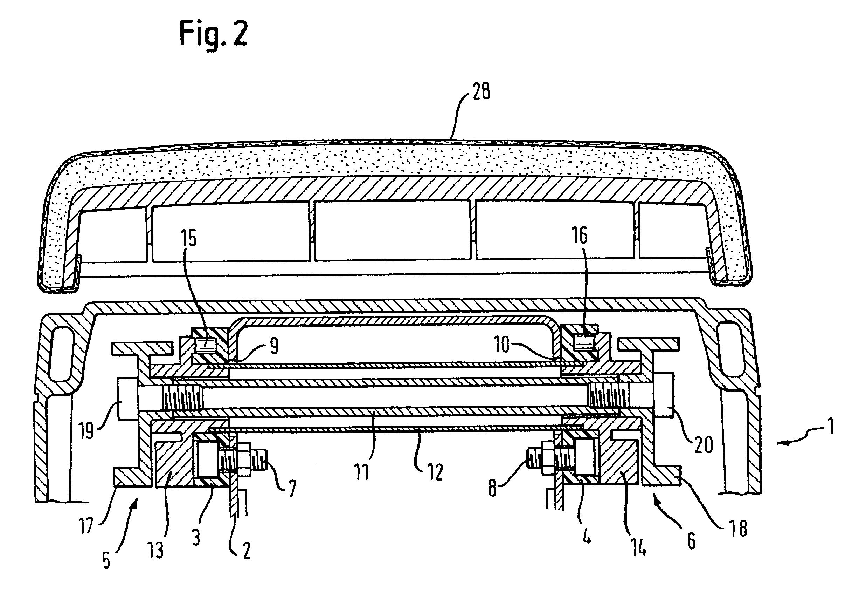

- Fig. 2: eine senkrechte Schnittansicht durch den fondseitigen Ausschnitt gemäß Fig. 1,

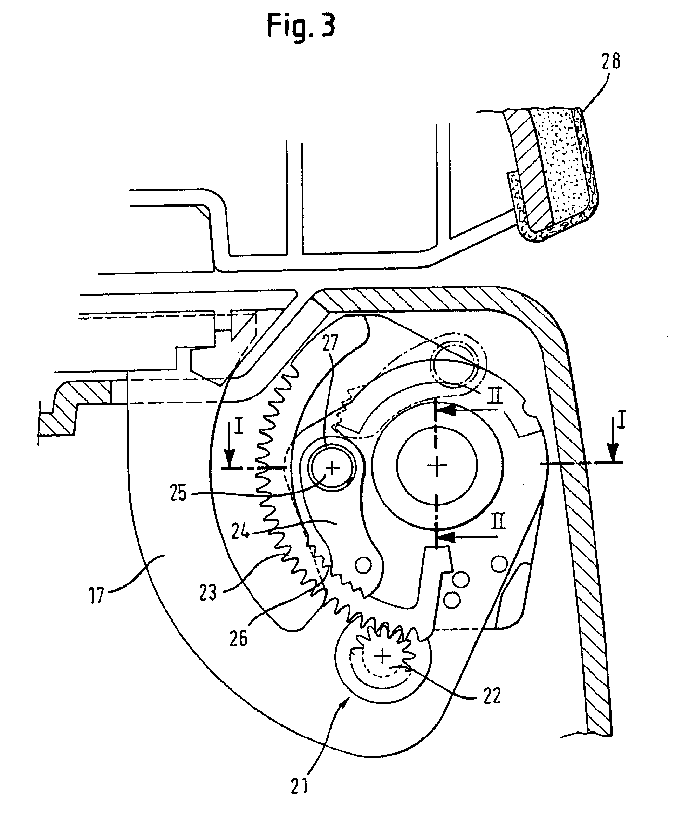

- Fig. 3: eine seitliche Draufsicht auf ein Scharnier,

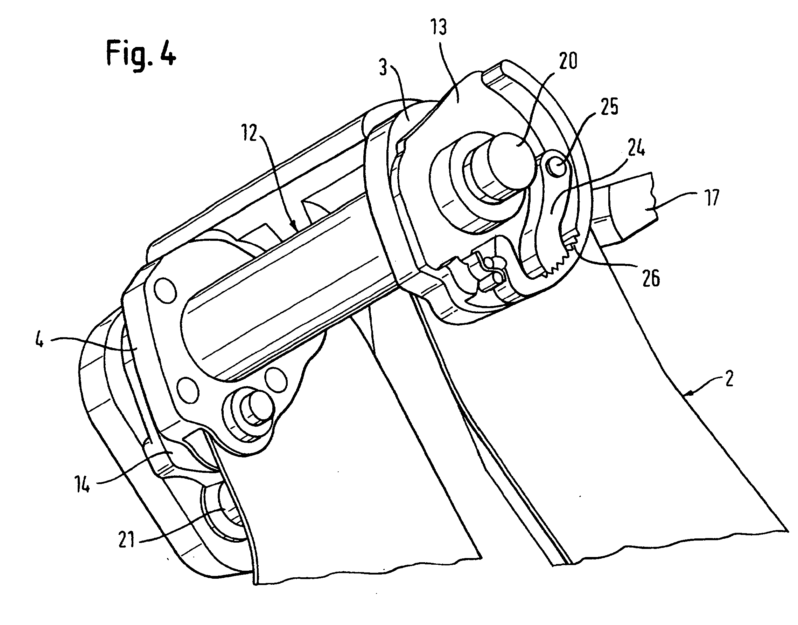

- Fig. 4: eine perspektivische Ansicht der Scharnierwelle, der Scharniere und eines Trägerkörpers und

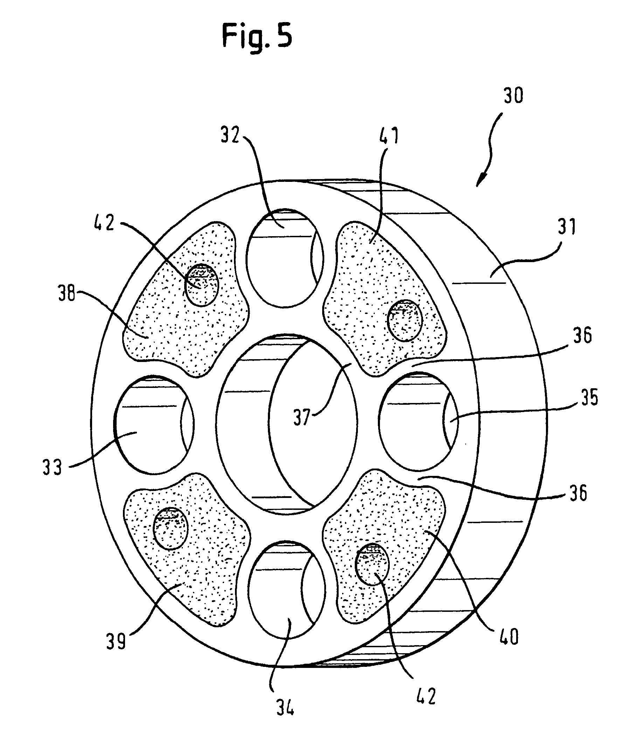

- Fig. 5: eine perspektivische Ansicht einer alternativen Ausführungs-form des Körpers zur elastischen Aufnahme eines Scharnierbügels.

Ein Personenkraftwagen weist eine Mittelkonsole 1 auf, die über einen Trägerkörper 2 Körper 3 und 4 für Scharniere 5 bzw. 6 aufnimmt, die jeweils über Schrauben 7 bzw. 8 mit dem Trägerkörper 2 verbunden sind.

Durch Öffnungen 9, 10 in der Wandung des Trägerkörpers 2 ist eine Scharnierwelle 11 hindurchgesteckt, die von einer Scharnierhülse 12 umgeben ist.

Auf die Körper 3, 4, die jeweils aus einem elastischen, dämpfenden Material bestehen, sind Scharnieraufnahmen 13, 14 aufgesteckt. Zum Aufstecken dienen jeweils mehrere fest mit den Scharnieraufnahmen 13, 14 verbundene Zapfen 15, 16.

Zwei Scharnierbügel 17, 18 sind über Schrauben 19, 20 mit der Scharnierwelle 11 drehfest verbunden. Die Scharnierbügel 17, 18 sind ebenso wie Scharnieraufnahmen 13, 14 Aluminium-Druckgussteile, während die Scharnierwelle 11 und die Scharnierhülse 12 aus Stahl bestehen.

Die Scharnierbügel 17, 18 tragen jeweils eine Fett- oder Silikonbremse 21. Diese weisen jeweils ein stirnseitiges Zahnrad 22 auf, das mit einer kreisbogenförmigen Zahnkontur 23 auf der Scharnieraufnahme 13, 14 kämmt. Dadurch wird die Schwenkbewegung der Scharnierbügel 17, 18 abgebremst. Ferner ist auf eine jeweils der Scharnieraufnahme 13, 14 zugewandten Seite der Scharnierbügel 17, 18 eine Sperrklinke 24 über einen an der Sperrklinke 24 angebrachten Bolzen 25 aufgesteckt. Dieser ragt in eine entsprechende Bohrung des Scharnierbügels 17, 18 und arretiert diesen in einer von mehreren durch ein Zahnprofil 26 vorgegebenen Rastpostionen. Die Sperrklinke 24 wird durch eine Stahlfeder 27 in ihrer Position gehalten.

Die Scharnierbügel 17, 18 tragen gemeinsam eine Armlehne 28. Wenn auf diese eine Last ausgeübt wird, wird diese über die Scharnierbügel 17, 18 und über die Scharnieraufnahmen 13, 14 auf die Körper 3, 4 übertragen, die sich aufgrund ihrer Elastizität verformen und die Last federnd abfangen.

Anstelle einer Ausformung der Körper 3, 4 aus einem einzigen elastischen Material lässt sich alternativ vorsehen, dass Körper 30 eine Ummantelung 31 aus einem festen Material, beispielsweise aus Aluminium oder Stahl, haben. Die Ummantelung 31 ist zudem über Schraublöcher 32 bis 35 umgebende Verbindungsstrukturen 36 mit einer inneren, die Scharnierhülse 12 umgebenden Wandung 37 verbunden. Über durch die Schraublöcher 32 bis 35 hindurchgesteckte Schrauben wird der Körper 30 mit der jeweiligen Wand des Trägerkörpers 2 verbunden.

Zwischen den Verbindungsstrukturen sind die Körper 30 jeweils mit Stücken 38 bis 41 aus elastischem Material aufgefüllt. Diese haben, wie bereits oben erläutert, Vertiefungen 42 zum Hineinstecken der Zapfen 15, 16 an den Scharnieraufnahmen 13, 14.

Sowohl bei den Körpern 3, 4 als auch bei den Stücken 38 bis 41 in den Körpern 30 lässt sich zur Erhöhung der Elastizität vorsehen, dass Bohrungen, Ausnehmungen, Schlitze und dgl. in das elastische Material eingebracht sind.

Zur Schaffung einer guten Verbindung zwischen den Scharnieraufnahmen 13, 14 und den als Dämpfungselementen wirkenden Körpern 3, 4 bzw. 30 haben die Scharnieraufnahmen bevorzugt einen zentralen topfförmigen Flansch, der die Körper 3, 4 bzw. 30 wenigstens teilweise durchdringt.

In einer weiteren Ausführungsform überkragt ein zu den Körpern 3, 4 bzw. 30 zugewandter Kragen auf den Scharnieraufnahmen.

## Patentansprüche

1. Deckelteil, insbesondere für eine Armlehne (28), welches über mindestens einen in einem Scharnier (5, 6) verschwenkbar gelagerten, in mindestens einer Position feststellbaren Scharnierbügel (17, 18) an einem Trägerkörper (2) gelagert ist, wobei in dem Scharnier (5, 6) ein Körper (3, 4; 30), welcher wenigstens ein elastische Eigenschaften aufweisendes Element (38 bis 41) umfasst, zur elastischen und dämpfenden Aufnahme einer auf das Deckelteil (28) wirkenden Kraft vorgesehen ist, wobei der Körper (3, 4; 30) wenigstens teilweise aus einem elastischeren Material als der Scharnierbügel (17, 18) und der Trägerkörper (2) ausgebildet ist,
**dadurch gekennzeichnet, dass** der Scharnierbügel (17, 18) über eine Scharnierwelle (11) verschwenkbar ist, wobei der Körper (3, 4; 30) fest mit dem Trägerkörper (2) verbunden ist und wobei ferner eine Scharnieraufnahme (13, 14), gegenüber der der mindestens eine Scharnierbügel (17, 18) drehbeweglich ist, fest mit dem elastischen Material des Körpers (3, 4; 30) verbunden ist.

2. Deckelteil nach Anspruch 1,
**dadurch gekennzeichnet, dass** der Körper (3, 4; 30) über mindestens eine Schraubverbindung mit dem Trägerkörper (2) verbunden ist.

3. Deckelteil nach einem der Ansprüche 1 bis 2,
**dadurch gekennzeichnet, dass** der Körper (3, 4) ein einziges elastische Eigenschaften aufweisendes Element aufweist.

4. Deckelteil nach einem der Ansprüche 1 bis 2,
**dadurch gekennzeichnet, dass** der Körper (30) eine Mehrzahl von elastische Eigenschaften aufweisenden Elementen (38 bis 41) aufweist.

5. Deckelteil nach Anspruch 1,
**dadurch gekennzeichnet, dass** die Scharnieraufnahme (13, 14) über Zapfen (15, 16) oder Schrauben mit dem Körper (3, 4; 30) verbunden ist.

6. Deckelteil nach Anspruch 1 oder 5,
**dadurch gekennzeichnet, dass** die Scharnieraufnahme (13, 14) eine dem Körper (3, 4; 30) zugewandten Kragen aufweist, der eine sich im wesentlichen parallel zur Richtung der Drehachse erstreckende Mantelwand des Körpers (3, 4; 30) wenigstens teilweise überkragt.

7. Deckelteil nach einem der Ansprüche 1, 5 oder 6,
**dadurch gekennzeichnet, dass** die Scharnieraufnahme (13, 14) einen topfförmigen, die Scharnierwelle (11) umgebenden Flansch aufweist, der den Körper wenigstens teilweise durchdringt.

8. Deckelteil nach einem der Ansprüche 1 bis 7,
**dadurch gekennzeichnet, dass** das elastischere Material des Körpers (3, 4; 30) Öffnungen, Durchbrüche oder Ausnehmungen aufweist.

## Claims

1. A cover member, particularly for an armrest (28), which is mounted on a support body (2) by means of at least one hinge (17,18), which is pivotably mounted in a hinge (5,6) and may be fixed in at least one position, wherein provided in the hinge (5,6) there is a body (3,4; 30) which includes at least one element (38 to 41) having elastic properties for the elastic and damping absorption of a force acting on the cover portion (28), wherein the body (3,4; 30) is constructed at least partially from a material which is more elastic than the hinge (17,18) and the support body (2), **characterised in that** the hinge (17,18) is pivotable by means of a hinge shaft (11), whereby the body (3,4; 30) is rigidly connected to the support body (2) and whereby further a hinge mounting (13,14), with respect to which the at least one hinge (17,18) is movable in rotation, is rigidly connected to the elastic material of the body (3, 4; 30).

2. A cover member as claimed in Claim 1, **characterised in that** the body (3,4; 30) is connected to the support body (2) by means of at least one screw connection.

3. A cover member as claimed in one of Claims 1 to 2, **characterised in that** the body (3,4) has a single element with elastic properties.

4. A cover member as claimed in Claims 1 to 2, **characterised in that** the body (30) has a plurality of elements (38 to 41) with elastic properties.

5. A cover member as claimed in Claim 1, **characterised in that** the hinge mounting (13,14) is connected to the body (3,4; 30) by means of pegs (15,16) or screws.

6. A cover member as claimed in Claim 1 or 5, **characterised in that** the hinge mounting (13,14) has a collar, which is directed towards the body (3,4; 30) and at least partially overhangs a side wall of the body (3,4; 30) extending substantially parallel to the direction of the rotary axis.

7. A cover member as claimed in Claims 1, 5 or 6, **characterised in that** the hinge mounting (13,14) has a cup-shaped flange, which surrounds the hinge shaft (11) and at least partially passes through the body.

8. A cover member as claimed in Claims 1 to 7, **characterised in that** the more elastic material of the body (3,4; 30) has openings, apertures or recesses.

## Revendications

1. Partie de couvercle, en particulier pour un accoudoir (28), qui est montée sur un corps de support (2) par le biais d'au moins un arceau de charnière (17, 18) monté à pivotement dans une charnière (5, 6) et blocable dans au moins une position, dans laquelle il est prévu dans la charnière (5, 6) un corps (3, 4 ; 30), qui comprend au moins un élément (38 à 41) présentant des propriétés élastiques, pour la réception élastique et amortissante d'une force agissant sur la partie de couvercle (28), dans laquelle le corps (3, 4 ; 30) est formé au moins en partie d'un matériau plus élastique que l'arceau de charnière (17, 18) et le corps de support (2),
**caractérisée en ce que** l'arceau de charnière (17, 18) peut pivoter par le biais d'un arbre de charnière (11), dans laquelle le corps (3, 4 ; 30) est raccordé de manière fixe au corps de support (2) et dans laquelle, en outre, un logement de charnière (13, 14), vis-à-vis duquel le au moins un arceau de charnière (17, 18) est mobile en rotation, est raccordé de manière fixe au matériau élastique du corps (3, 4 ; 30).

2. Partie de couvercle selon la revendication 1,
**caractérisée en ce que** le corps (3, 4 ; 30) est raccordé au corps de support (2) par au moins un raccord à vis.

3. Partie de couvercle selon l'une quelconque des revendications 1 à 2,
**caractérisée en ce que** le corps (3, 4) présente un seul élément témoignant de propriétés élastiques.

4. Partie de couvercle selon l'une quelconque des revendications 1 à 2,
**caractérisée en ce que** le corps (30) présente une pluralité d'éléments (38 à 41) témoignant de propriétés élastiques.

5. Partie de couvercle selon la revendication 1,
**caractérisée en ce que** le logement de charnière (13, 14) est raccordé au corps (3,4 ; 30) par des tourillons (15,16) ou des vis.

6. Partie de couvercle selon la revendication 1 ou 5,
**caractérisée en ce que** le logement de charnière (13, 14) présente un collet tourné vers le corps (3, 4 ; 30), qui fait saillie au moins en partie d'une paroi d'enveloppe du corps (3, 4 ; 30) s'étendant de manière sensiblement parallèle à la direction de l'axe de rotation.

7. Partie de couvercle selon l'une quelconque des revendications 1, 5 ou 6,
**caractérisée en ce que** le logement de charnière (13, 14) présente une bride en forme de pot entourant l'arbre de charnière (11) et qui traverse au moins en partie le corps.

8. Partie de couvercle selon l'une quelconque des revendication 1 à 7,
**caractérisée en ce que** le matériau plus élastique du corps (3, 4 ; 30) présente des ouvertures, des percements ou des évidements.
